Europäisches Patentamt

European Patent Office

Office européen des brevets

(19)

(11) Publication number: **0 237 144**

.A1

(12) **EUROPEAN PATENT APPLICATION**

(21) Application number: **87300255.4**

(22) Date of filing: **13.01.87**

(51) Int. Cl.⁴: **F16D 13/71 , F16D 13/58**

(30) Priority: **12.02.86 IT 1937786**

(43) Date of publication of application:
**16.09.87 Bulletin 87/38**

(84) Designated Contracting States:
**DE ES FR IT**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Cucinotta, Luigi**
**Via 25 Aprile 6**
**I-20020 Arese Milan(IT)**
Inventor: **Di Benedetto, Orazio**
**Via Papa Giovanni XXIII 6**
**I-20020 Arese Milan(IT)**

(74) Representative: **Kinrade, John**
**Automotive Products plc Patent Department**
**Tachbrook Road**
**Leamington Spa Warwickshire, CV31 3ER(GB)**

(54) **Method of assembling a diaphragm spring clutch.**

(57) To assemble a diaphragm spring clutch 2, the diaphragm spring 22 and pressure plate 16 are initially clipped together at their respective peripheral lugs 68 and 74 by removable U-shaped clips 76 to hold the pre-stressed diaphragm spring and the pressure plate axially together. A fly-wheel 10 providing counter-pressure face 8 is integral with a cylindrical clutch cover wall 4 defining a cylindrical chamber 6 in which a clutch driven plate 12 is disposed. The clipped combination of the diaphragm spring 22 and pressure plate 16 are then inserted pressure plate first into chamber 6 followed by fulcrum ring 28 which is held against the diaphragm spring 22 by a retaining circlip 30 engaged in a groove in the wall 4. Leaf springs 64 forming release and drive straps riveted to the pressure plate lugs 68 are now bolted to the cover wall 4 and then the clips 76 are pulled off the pressure plate and diaphragm spring through axial slots 62 in the cover wall 4.

FIG. 2.

## Method of Assembling A Diaphragm Spring Clutch

This invention concerns a method of assembling a diaphragm spring clutch.

According to the invention there is provided a method of assembling a diaphragm spring clutch in which the clutch comprises a hollow cover surrounding an internal chamber which is open at at least one end, a clutch driving plate fixed for rotation with the cover and defining at least in part an end of the chamber, and a clutch driven plate disposed with a clutch pressure plate and a diaphragm spring in said chamber in which the driven plate is clampable between the pressure plate and the driving plate under urging by the diaphragm spring,

the method of assembly being characterised in that it includes maintaining the axial positions of the diaphragm spring and pressure plate one relative to the other by gripping the diaphragm spring and pressure plate between a plurality of removable spaced clips each simaltaneously engaging a peripheral portion of the diaphragm spring and a peripheral portion of the pressure plate, bringing the cover and driven plate into a relationship in which the driven plate is disposed in the chamber, inserting the clipped combination of the pressure plate and diaphragm spring into the chamber, mounting retaining means in position to retain the diaphragm spring in the chamber, and removing the clips.

In producing the clipped combination of diaphragm spring and pressure plate in the course of carrying out the method of clutch assembly, the pressure plate and diaphragm spring are brought together and a circumferential Belleville portion of the spring can be axially pre-stressed towards the pressure plate. Then the pre-stressed Belleville portion can be clipped to the pressure plate so that the spring is held in the pre-stressed state against the plate and cannot separate therefrom until the clips are removed. Thus the clipped combination can form a single unit which is easy to handle and can be readily inserted into the cover with the diaphragm spring constrained by the clips to facilitate the mounting of the retaining means in position. In other words it is not necessary to struggle against the power of the diaphragm spring whilst fitting the retaining means which retains the diaphragm spring in a stressed state after the clips are removed. The clipped combination of diaphragm spring and pressure plate may be produced and then stored until needed and/or transported to the place where the combination is required for forming a clutch.

The cover and driving plate may be integral and form a fly-wheel of an engine, for example an internal combustion engine which may be used to power a motor vehicle.

The peripheral portion of the diaphragm spring may be a lug at the periphery of the spring.

Each clip may be placed in its gripping position by moving the clip radially inwardly over the pressure plate and the diaphragm spring and can be removed by moving the clip radially outwardly of the diaphragm spring and pressure plate.

Each clip may be of U-shape form in which one or a first limb of the U engages a surface of the pressure plate on a side of the pressure plate remote from the diaphragm spring and the other or second limb of the U engages a surface of the spring remote from the pressure plate.

The first limb may be formed to fit about a fastening device on the pressure plate. The first limb may be formed with an opening to accommodate the fastening device. The fastening device may be a rivet.

The retaining means may comprise a spring clip inserted in a groove in a wall of the cover surrounding the chamber.

The pressure plate may be provided with release springs secured thereto and after insertion of the pressure plate into the chamber the release springs may be fastened to the cover by means of detachable screw devices engaging the cover.

Various aspects of the invention will now be further described, by way of example, with reference to the accompanying drawings in which:-

Fig.I is a plan view of a clutch assembled using the method according to the invention;

Fig.2 is section on line II-II in Fig.I;

Fig.3 is a section on line III-III in Fig.I;

Fig.4 is a section of the clutch pressure plate and diaphragm spring of Fig.I clipped together to prevent their axial separation in the course of a performance of the method according to the invention, and

Fig.5 is a fragmentary view in the direction of arrow V in Fig.4.

Referring to Figs.I to 3, a pull-type clutch is shown at 2 to transmit rotary motion from a driving source to driven means. The clutch may be used in a motor vehicle.

The clutch has a cover 4 defining an internal cylindrical chamber 6 open at one end and closed at the other by an end wall formed at least in part by an annular driving plate 8 integral with the cover as parts of a fly-wheel I0 to be rotated about an axis X by, for example, an internal combustion engine.

The clutch further comprises a driven plate l2 with friction facings l4, and an annular pressure plate l6 with an annualar fulcrum arrangement l8 bearing on a circumferential Belleville portion 20 of a diaphragm spring 22 having radially inwardly directed fingers 24 spaced by slots 26. Remote from the pressure plate, the diaphragm spring 22 bears on a fulcrum ring 28 braced against a circular spring clip or circlip 30 having the usual release ears 32 and seated in an annular groove 34 in an inner wall of the cover and adjacent to the open end of the chamber 6. The fulcrum ring 28 may provide cushioning and can be of the wavy ring kind described in British Patent No.l 583 403 of Automotive Products Limited.

The driven plate l2 is mounted on an output shaft 36 (which may be an input shaft to a vehicle gearbox) in a bearing 38 in the fly-wheel. The driven plate l2 has a disc 40 with internal teeth engaging axial splines 42 on the shaft 36. Sitting on the splines are bushes 44 and 46 each carrying a respective cheek plate 48 or 50 secured together by stop rivets 52 passing through arcuate recesses 54 in the disc 40. Torsion damping springs 56 are disposed in windows in the disc 40 and cheek plates 48 and 50. The friction facings l4 are secured to a carrier plate 58 secured to the cheek plate 50 by the rivets 52, and the driven plate assembly is axially braced by a Belleville washer 60.

The wall of cover 4 has three substantially equi-angularly spaced slots 62 therein each extending axially and being through in the radial direction. Disposed in each slot is a tangential release spring strap 64 secured at one end by a rivet 66 to a respective radial lug 68 integral with the pressure plate l6 at its circumference. The other end of strap 64 is secured to the fly-wheel l0 by a screw or threaded bolt 70 of which the head is wholly inset in the recess 62.

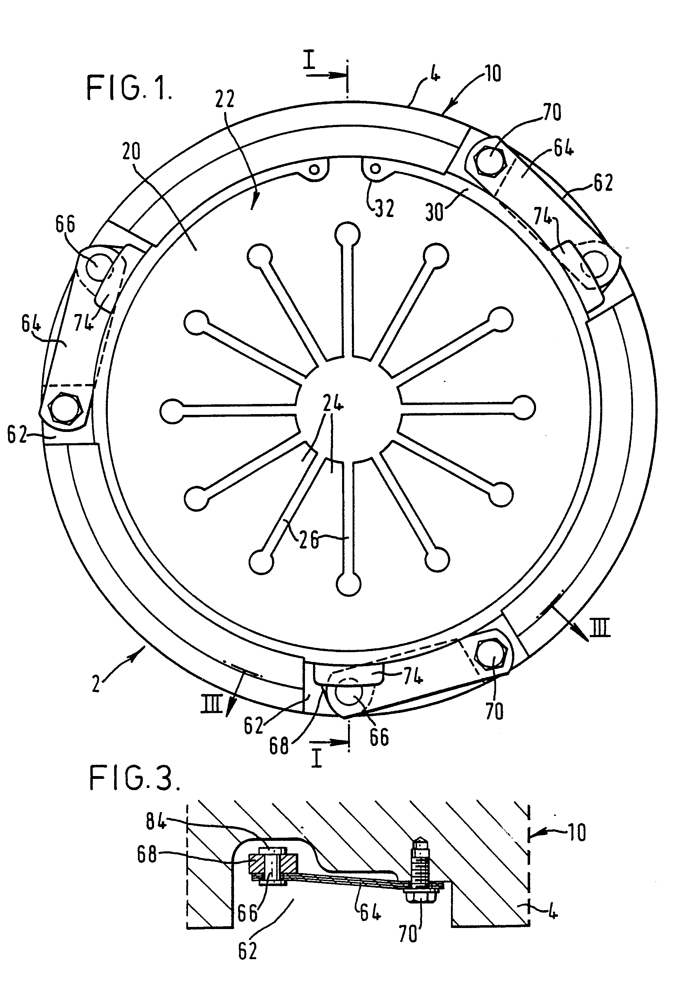

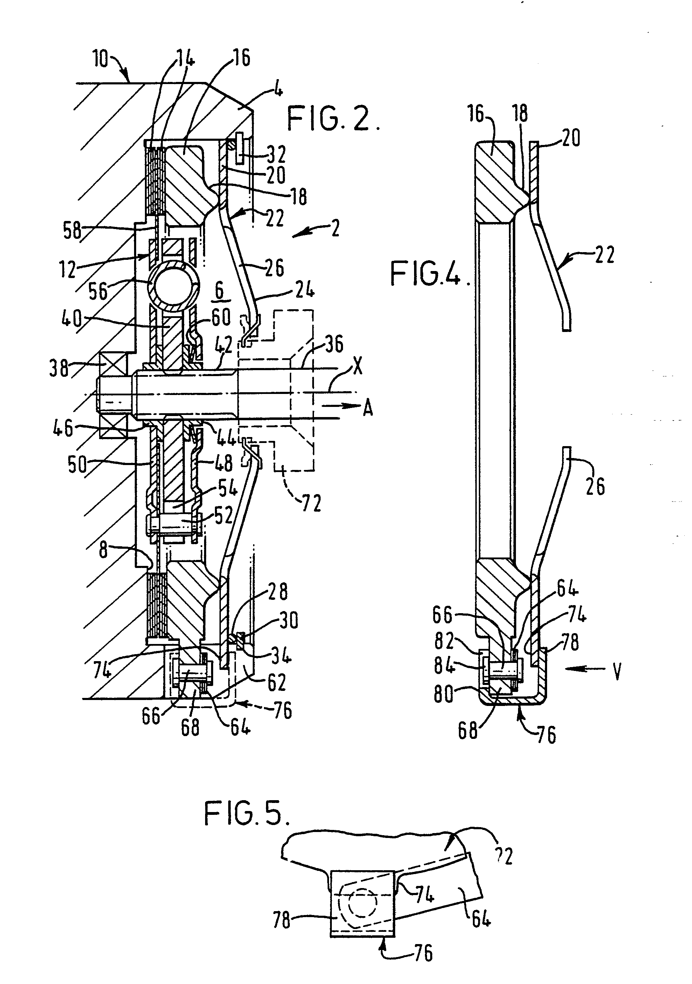

In Fig.2 the clutch is shown engaged. To release the clutch a release bearing 72 engaging the inner ends of the fingers 24 pulls them in direction A (Fig.2).

The lugs 68 are substantially equi-angularly spaced apart and a similar number of equi-angularly spaced radial lugs 74 are integral with the diaphragm spring 22 at its circumference. Therefore when one of the lugs 74 overlies a said lug 68 each of the other lugs 74 overlies a respective one of the other said lugs 68.

As an aid to assembling the clutch a plurality of clips 76 are provided. Each clip is of substantially U-shape and of sheet material so that major planar faces of its two limbs 78 and 80 face one another. The clips may have some resilience and may be of metal, for example steel. When the clips are not in use at least one of the limbs 78 or 80 may have at least a portion inclined or extending towards the other limb along a direction away from the cross-piece of the U end towards the free ends of the limbs. If desired the free end of either or each limb 78, 80 may be outwardly chamfered or flared to provide a lead-in.

When the clutch is to be assembled the diaphragm spring 20 is placed on the fulcrum l8 so that the lugs 78 overlie the lugs 68. Then the Belleville portion 20 is pre-stressed by axially directed force towards the pressure plate l6 until the clips 76 can each be pushed over a respective said lug 68 and the corresonding overlying lug 74 as shown in Fig.4 (and also in Fig.5) so that the diaphragm spring 22 is held in a pre-stressed state by the three spaced clips 76 against the pressure plate and cannot be separated axially from the plate. To facilitate the fitting of each clip, the limb 80 has from its free end a slot or notch 82, which may be U-shape, enabling the limb to fit about a head or end enlargement 84 on a said rivet 66. After the driven plate l2 becomes disposed in the chamber 6 the clipped combination of diaphragm spring 22 and pressure plate l6 is inserted into the chamber past the groove 34. Since the diaphragm spring 24 is held by the clips 76 (shown in phantom lines in Fig.2) the diaphragm spring does not provide a strong reaction against insertion of the fulcrum ring 28 or the introduction of the circlip 30 into the groove 34. The screws or bolts 70 are inserted into the slots 62 and screwed into place to clamp the release straps 64 to the fly-wheel l0. Now the clips 76 are pulled off through the slots 62 by an appropriate tool so that the Belleville portion 20 can press fully against the retaining circlip 30 via the fulcrum ring 28.

## Claims

l. A method of assembling a diaphragm spring clutch in which the clutch (2) comprises a hollow cover (4) surrounding an interal chamber (6) which is open at at least one end, a clutch driving plate - (8) fixed for rotation with the cover and defining at least in part an end of the chamber, and a clutch driven plate (l2) disposed with a clutch pressure plate (l6) and a diaphragm spring (22) in said chamber in which the driven plate is clampable between the pressure plate and the driving plate under urging by the diaphragm spring,

the method of assembly being characterised in that it includes maintaining the axial positions of the diaphragm spring (22) and pressure plate (l6) one relative to the other by gripping the diaphragm spring and pressure plate between a plurality of removable spaced clips (76) each simultaneously engaging a peripheral portion (74) of the diaphragm

3

spring and a peripheral portion (68) of the pressure plate, bringing the cover (4) and driven plate (l2) into a relationship in which the driven plate is disposed in the chamber (6), inserting the clipped combination of the pressure plate (l6) and diaphragm spring (22) into the chamber (6), mounting retaining means (32) in position to retain the diaphragm spring (22) in the chamber (6), and removing the clips (76).

2. A method as claimed in Claim l, characterised in that the cover (4) and driving plate (8) are integral and form a fly-wheel (l0).

3. A method as claimed in Claim l or Claim 2, characterised in that the peripheral portion of the diaphragm spring (22) is a lug (78) at the periphery of said spring.

4. A method as claimed in any one preceding claim, characterised in that the peripheral portion of the pressure plate (l6) is a lug (68) at the periphery of the pressure plate.

5. A method as claimed in any one preceding claim, characterised in that each clip (76) is placed in its gripping position by moving the clip radially inwardly over the pressure plate and the diaphragm spring (22) and (l6) can be removed by moving the clip radially outwardly of the diaphragm spring and pressure plate.

6. A method as claimed in any one preceding claim, characterised in that each clip (76) has a U-shape form in which one or a first limb (80) of the U engages a surface of the pressure plate (l6) on a side of the latter remote from the diaphragm spring (22) and the other or second limb (78) of the U engages a surface of the diaphragm spring (22) on that side of the spring remote from the pressure plate (l6).

7. A method as claimed in in Claim 6, characterised in that the first limb (80) is formed (82) to fit about a fastening device (66, 84) on the pressure plate (l6).

8. A method as claimed in any one preceding claim, characterised in that the retaining means comprises a spring clip (30) inserted in a groove in a wall of the cover (4) surrounding the chamber (6).

9. A method as claimed in any one preceding claim, characterised in that a fulcrum ring (28) is positioned between the diaphragm spring (22) and the retaining means (30).

l0. A method as claimed in any one preceding claim, characterised in that the pressure plate (l6) is provided with release springs (64) secured thereto, and after insertion of the pressure plate (l6) into the chamber (6) the release springs are fastened to the cover (4) by means of detachable screw devices (70) engaging the cover.

ll. A clutch (2) characterised in that it is assembled using the method as claimed in any one preceding claim.

FIG.1.

FIG.3.

FIG. 2.

FIG. 4.

FIG. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-2 550 835 (DAIKIN SEISAKUSHO K.K.) | . | F 16 D 13/71 <br> F 16 D 13/58 |
| | --- | | |
| A | US-A-2 017 915 (A. MOORHOUSE) | | |
| | --- | | |
| A | PATENT ABSTRACTS OF JAPAN, vol. 7, no. 189 (M-237)[1334], 18th August 1983; & JP-A-58 91 926 (DAIKIN SEISAKUSHO K.K.) 01-06-1983 | | |
| | ----- | | |

TECHNICAL FIELDS SEARCHED (Int. Cl.4)

F 16 D

The present search report has been drawn up for all claims

| Place of search | Date of completion of the search | Examiner |
|---|---|---|
| THE HAGUE | 18-05-1987 | BEGUIN C.P. |